# EUROPEAN PATENT SPECIFICATION

(11) **EP 2 833 269 B1**
(45) Date of publication and mention of the grant of the patent: **10.05.2017**
(21) Application number: 14178439.7
(22) Date of filing: 24.07.2014
(51) Int. Cl.: G06F 17/28, G06F 17/27

(54) **Terminology verification system and method for machine translation services for domain-specific texts**
Terminologieüberprüfungssystem und -verfahren für Dienste zur maschinellen Übersetzung domänenspezifischer Texte
Système et procédé de vérification de terminologie pour services de traduction par machine pour des textes spécifiques de domaine

(30) Priority: 31.07.2013 US 201313955315
(43) Date of publication of application: 04.02.2015
(73) Proprietor: Xerox Corporation, Norwalk, CT 06856-4505 (US)
(72) Inventor: Nikoulina, Vassilina, 38000 Grenoble (FR); Dymetman, Marc, 38000 Grenoble (FR)
(74) Representative: Gill Jennings & Every LLP

(56) References cited:
- US-A1- 2010 082 324
- MASAKI ITAGAKI ET AL: "Post-MT Term Swapper: Supplementing a Statistical Machine Translation System with a User Dictionary", LREC 2008, 28 May 2008 (2008-05-28), pages 1584-1588, XP055195405, Marrakech, Morocco
- ALESSIO BOSCA ET AL: "A Lightweight Terminology Verification Service for External Machine Translation Engines", PROCEEDINGS OF THE DEMONSTRATIONS AT THE 14TH CONFERENCE OF THE EUROPEAN CHAPTER OF THE ASSOCIATION FOR COMPUTATIONAL LINGUISTICS, 26 April 2014 (2014-04-26), pages 49-52, XP055195394, Gothenburg, Sweden

## Description

The Government Agency providing funding for this application is the European Union under Contract Number 270999, program name Organic.Lingua.

### BACKGROUND

The presently disclosed embodiments are directed to machine translation services of a first language text to a second language text, and more particularly, to the translation of domain-specific terminology within a text with a generic machine translation service. By "domain-specific" is meant that the terminology is dedicated to a particular subject (e.g., agriculture), problem or representation domain.

There are a number of generic machine translation services available for a large number of language pairs, e.g., Google Translate™, Bing™, and the like. The services allow relatively easy textual translation so that a document library can be multilingual. Such services are beneficial to allow access to documents written in (for example) a lesser known or unpopular language such as Estonian to a broader public. A particular problem arises though when the translating is performed by applying a generic machine translation (GMT) service to domain-specific text in that the translations often produce wrong results, especially when the translating concerns the translation of domain-specific terminology. Such a translation can be incomprehensible or misleading.

### Example:

Source sentence in English: Consequently, farmers tend to implement a broad non-focused **weed-control** strategy, on the basis of broad spectrum products and mixtures of different products.

Spanish Google translation: En consecuencia, los agricultores tienden a aplicar una amplia y no centrada en la estrategia de **control de malezas**, sobre la base de productos de amplio espectro y las mezclas o productos diferentes.

Spanish Bing translation: En consecuencia, los agricultores tienden a aplicar una estrategia amplia para **control de malezas** no centrado, sobre la base de productos de amplio espectro y las mezclas de diferentes productos.

Domain-adapted translation model: Por consiguiente, los agricultores tienen tendencia a no aplicar una amplia estrategia centrada control de malas hierbas, sobre la base de amplio espectro productos y mezclas de productos diferentes.

Correct terminology translation: weed-control = control de malas hierbas.

A known resolution to realize correct terminology translation is to train a domain-adapted translation model system on its own for the particular languages involved. However, such a training requires both significant expertise in a statistical machine translation ("SMT") and an important amount of both in-domain and generic parallel texts, which is often not easily feasible, especially for low-resourced languages like Turkish or Estonian. Thus, there is a need for a correctly translating system where the content provider is not willing to train a dedicated translation system, either for reasons such as lack of technical skills or lack of parallel data. However, where a content provider has at its disposal a multilingual in-domain terminology dictionary that can be helpful for improving a generic translation provided by a service, the foregoing problems could be overcome. Such a service would perform multilingual terminology verification/correction services which not only detect wrongly translated terms, but also suggests a better translation of those terms.

More particularly, there is a need for a system that with mere access to a bilingual domain-specific technology dictionary the translation provided by a GMT service can be improved. Such a system and method would verify whether the terminology is domain-specific, and whether the translation was translated correctly by the GMT service, and if not, would locate the wrong translation of the term and suggest a better alternative translation of the term. Such a system and procedure would function as an aid for machine translation post-editing focused on in-domain terminology.

US 2010/0082324 A1 describes an example system for translation based on domain-specific terminology, including a first translation step at a generic machine translation system followed by a step involving the replacement of incorrect terms by domain specific variants.

### SUMMARY

Methods and systems are provided for multilingual translation including a domain-adapted verification/correction service.

In accordance with one embodiment, a method of multilingual translation including a domain-adapted verification/correction service is disclosed. The method includes first translating a first language item including domain-specific terminology to a corresponding second language item with a generic machine translation service. Correctness of terminology translation in the second language item relative to the first language item is verified by accessing a domain-specific multilingual terminology dictionary including the domain-specific terminology. If an inconsistency is identified between a selected terminology in the second language item and a translating of the selected terminology by the terminology dictionary, the method includes replacing the selected terminology in the second language item with a terminology translation of the selected terminology from the terminology dictionary. The generic machine translation service is accessed for a second translation of the first language item including the terminology translation including a contextual translating of the first language item including the terminology translation.

The method may include first translating a first language item (e.g., a source sentence "*s*") including domain-specific terminology to a corresponding second language item (e.g., a translated sentence "MT(*s)*) with a GMT service. The correctness of the terminology translation in the second language item is verified by accessing a domain-specific multilingual dictionary ("DS") including the domain-specific terminology. Each term (*t*) in the terminology translation is checked to see if it is in the DS. If it is, then the term's source part (*Ts*) is searched to see if it is in the first language item s. If the first language item includes the source part *Ts*, then the corresponding target part (*Tt*) of *Ts* from the DS is checked to see if it is in the terminology translation. If yes, and the number of occurrences of *Ts* in s is equal to the number of *Tt* in *MT(s),* then the translation is deemed to be consistent with the terminological base of the subject domain-specific terminology. If an inconsistency is identified between the selected terminology in the second language item, and a translating of the selected terminology by the dictionary, the selected terminology is replaced in the second language item with a technology dictionary terminology translation of the selected terminology from the domain-specific technology dictionary. The GMT service is then re-accessed for a second translating of the first language item including the terminology translation comprising a contextual translation of the first language item including the technology dictionary terminology translation.

In accordance with examples, the location of wrong term translation in the translated second language item is achieved by relying on the same generic machine translation service that was used for translating the whole first language item since the translation of the first language with the same MT engine.

In accordance with the examples , a system for automated validation of a translation provided by a generic machine translation (GMT) service engine comprises a GMT engine, a domain-specific multilingual terminology dictionary (DS) and a translation processor. The processor effects (1) a first call to the GMT engine to obtain a first translation of an input text to a first translation text; (2) a verification of a presence of a domain-specific terminology item in the input text; (3) a correctness assessment of the domain-specific term translation using the DS; (4) location of incorrect term translation via a second call to the GMT engine to obtain a translation of the domain-specific term found in input text, and matching the obtained term translation with the first translation text (5) suggesting a replacement of the incorrect domain-specific term translation with a correct domain-specific translation text item from the DS.

### BRIEF DESCRIPTION OF THE DRAWINGS

FIGURE 1 is block diagram/flowchart of steps implemented by a processor to achieve the subject terminology verification embodiments; and,
FIGURE 2 is a flowchart of steps to assess a correctness of a translation suggested by the subject terminology verification embodiments.

### DETAILED DESCRIPTION

The subject embodiments are directed to systems for locating an incorrect term translation in the GMT (input text) using the same GMT model for doing both the translation and the location of incorrect term translations. The incorrect term translation, once it is located, can either be directly replaced with a correct term translation (coming from a terminology dictionary), or can simply be suggested to a user as a potential replacement. In both cases a user needs to know the location of the wrong translation and it is so indicated to the user by the system. More particularly, when the GMT translates domain-specific terminology incorrectly, usually because it is not necessarily adapted to the domain and has no knowledge of what is the actual domain of the input text, and thus does not know a correct term translation, the subject systems perform additional verification for terms that are important for the subject domain, via a domain-specific terminology dictionary. By accessing such a domain-specific terminology dictionary, the GMT will be able to suggest a better translation.

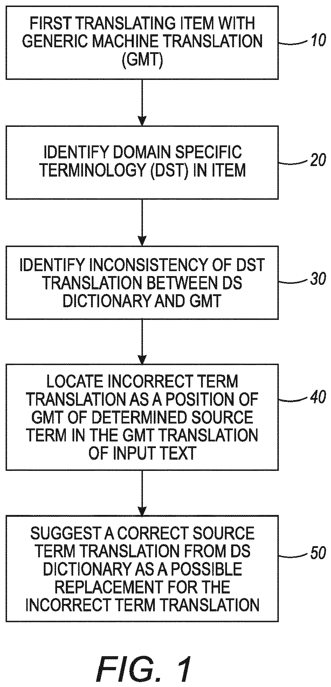

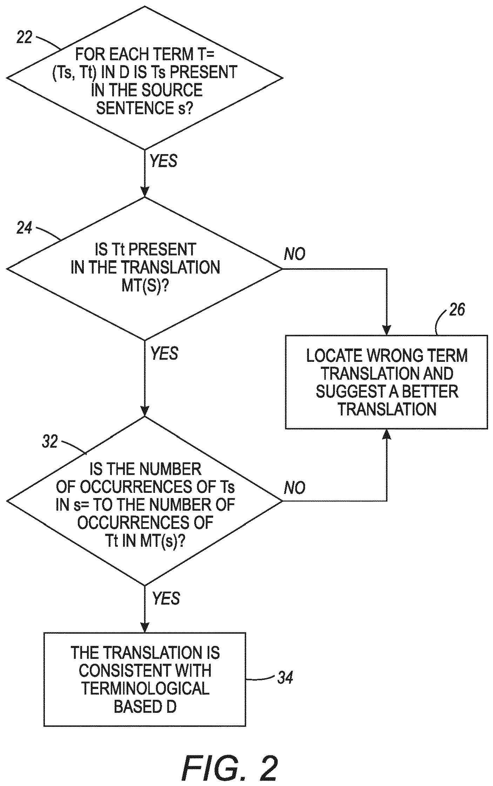

With reference to FIGURES 1 and 2, examples are shown.

The examples comprise systems and methods utilizing a GMT engine, which is applied to translate a source sentence s in combination with an available domain-specific multilingual terminology dictionary ("DS" or "D"). The basic terminology verification procedure that is applied to the sentence s and to its translation *MT(s)* is done through the following steps:
1. For each term *T* = (*Ts*, *Tt*) in D check whether the source part *Ts* is present in the source sentence s. **22** [Fig. 2]
2. If s contains *Ts*, check whether the target part of the term *Tt* is present in the translation *MT(s).* **24**
   - If yes, and the number of occurrences of *Ts* in s is equal to that of *Tt* in *MT(s)* the term translation is consistent with the terminological base, **32** and the translation is deemed consistent **34.**
   - Otherwise, the wrong term translation is located and a better translation to the user is suggested **26.**

Each of these steps requires a sub-string matching algorithm which should be able to deal with term detection problems such as morphological variants, term graphical variants (e.g. "air flow" or "airflow"), non-contiguity (e.g. Term "Fonction de Cobb-Douglas" should be detected in the following context: "fonction de production de Cobb-Douglas") etc. There already exist several approaches for these problems that rely on Part of Speech (PoS) tagging and lemmatization of terms for resource-rich languages, and/or Levenstein distance and Longest Common Subsequence algorithm for resource poor languages.

Once it is detected that there is a source term *Ts* which has been incorrectly translated, a better translation for this term is suggested. This requires not only knowing a correct translation *(Tt)* of the term *(Ts)*, but also its position in the target sentence *(t(Ts)).* In other words, one needs to identify what was the incorrect translation proposed by the MT engine and to locate its position in the translation *MT(s).*

This can be seen as a sub-problem of the word-alignment problem, which is usually solved using bilingual dictionaries or by learning statistical alignment models out of bilingual corpora. However, in practice, these resources are not easily available, especially for low-resourced language pairs (e.g., Turkish, Latvian).

In order to solve this problem of locating the wrong term translation in the target without resorting to such resources, the examples rely instead on the same external MT engine that was used for translating the whole source text in the first place. The hypothesis is that the translation of the isolated source term *Ts* with the same MT engine should enable one to locate the wrongly translated term *t(Ts)* in *MT(s)* in most of the cases.

The location of the wrong term translation *t(Ts)* can be done by directly matching *MT(Ts)* in the translation of the whole sentence *(MT(s))*, and choosing the best matching sub-string.

While this is likely to work reasonably well in many cases, it is however possible that the MT engine translation of an isolated term will be different from its translation of the same term in context. This is especially true for statistical models where the word order and surrounding tokens may influence the choice of the best translation due to the influence of the target language model. In such cases one may consider not only the translation of the term itself, but different variants of it:
1. translation of term out-of-context : *MT(Ts)*;
2. translation of context-extended term; e.g., if s = *s1...sN*, the context-extended term is *si-n Ts sj*+*n*, where *Ts* = *si...sj*; thus, one relies on the match between the translation *MT(si-n Ts sj*+*n)* to locate *t(Ts)* in *MT(s)*;
3. translation of the left and/or right context (possibly restricted to n-gram): *MT(si-n...si-1)*, *MT(sj*+*1...sj*+*n)*; this variant may allow to locate the limits of the wrong term translation;
4. re-translation of the whole sentence with the term excluded (or replaced by a non-translatable place-holder).

In theory, none of the above options can guarantee a perfect term location in the case of SMT, which can produce unexpected results when the context has been changed, or when unknown words (place-holders) have been artificially introduced (the unknown tokens might be heavily penalized by Language Model (LM) at the decoding stage which may lead to a very different translation).

These variants can be combined in multiple ways in the final framework for wrong term translation location:
- sequentially: if the wrong term translation was not located after the first step (out-of-context translation), attempt the following step, until the term is located;
- considering all translation options simultaneously:
   - each option suggests a possible term location; the best location can be chosen via choosing a term location suggested by the majority (of the 4 variants for term location described above);
   - find possible wrong term translation locations with each of the variants, assign a confidence score to each of them, and choose the most confident one.

With particular reference to FIGURE 1, the foregoing steps are seen grammatically wherein the system processor (not shown) first translates **10** an input text item with a generic machine translation (GMT). The processor then identifies **20** whether any domain-specific terminology (DST) is present in the input text. The correctness is verified by assessing whether the target part of the so determined source term is present in the generic machine translation of the input text. Such checking can identify **40** whether there was an inconsistency in the domain-specific terminology translation between a domain-specific dictionary translation and the GMT. Upon detection of the inconsistency, an incorrect term translation is located as a position of generic machine translation of a determined source term (possibly extended with its context) in the generic machine translation of input text **50.** A correct source term translation is suggested **60** from the domain-specific terminology dictionary, as a possible replacement of the incorrect term translation located in **50.**

FIGURE 2, as discussed above, then assesses the correctness of the translation by counting the number of occurrences of the domain-specific target term translation in the generic machine translation of the input text.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

## Claims

1. A method of multilingual translation including a domain-adapted verification/correction service, including:
first translating (10), by a processor, a first language item including domain-specific terminology to a corresponding second language item with a generic machine translation service, the first language item comprising an ordered set of tokens;
verifying (30), by a processor, correctness of terminology translation in the second language item relative to the first language item by accessing a domain-specific multilingual terminology dictionary including the domain-specific terminology;
if an inconsistency is identified between a selected terminology in the second language item and a translating of the selected terminology by the terminology dictionary, replacing (50), by a processor, the selected terminology in the second language item with a terminology translation of the selected terminology from the terminology dictionary; and
accessing, by a processor, the generic machine translation service for a second translating of the first language item including the terminology translation comprising a contextual translating of the first language item including the terminology translation;
**characterized in that** verifying comprises:
counting of occurrences of source and translation parts corresponding to the domain-specific translation text item in the input text and the first translation; and
upon the counting, determining a different number of source and translation parts, locating a wrong term translation in the first translation, and determining an alternative translation;
wherein locating a wrong term translation in the first translation comprises, sequentially:
attempting to locate the wrong term by out-of-context translation;
if the wrong term translation cannot be located by out-of-context translation, attempt the following steps, until the term is located;
considering all translation options simultaneously, each option suggesting a possible term location, wherein the translation options comprise out-of-context translation of the term, translation of the term with n neighbouring tokens of the term in the first language item, translation of the n tokens left and/or right of the term in the first language item, and translation of the first language item excluding the term; and
selecting the best location based on the location suggested by the majority of the translation options

2. The method of claim 1 wherein for the selected terminology comprises a source term in the first language item and a corresponding translation term in the second language item, and the verifying comprises identifying if the source term or the translated term is included in the domain-specific multilingual terminology dictionary.

3. The method of claim 2 wherein the identifying comprises checking if a source part of the translated term is present in the first language item.

4. The method of claim 3 wherein the first language item comprises a source sentence and the checking includes confirming a presence of the source part in the source sentence.

5. The method of claim 4 wherein upon confirming of the presence of the source part in the source sentence, checking if a target part of the translated term has a presence in the second language item.

6. The method of claim 5 wherein upon the second checking confirming the presence of the target part in the second language item, the method further includes first counting a number of occurrences of the source part in the source sentence, and second counting a number of occurrences of the target part in the corresponding second language item, and if the first counting and the second counting are equal in number, accepting the corresponding second language item as a proper and consistent translation relative to a terminological base of the terminology dictionary.

7. A system for automated validation of a translation provided by a generic machine translation engine, comprising:
a generic machine translation engine;
a domain-specific multilingual terminology dictionary; and
a translation processor for effecting:
a first call to the generic machine translation engine to obtain a first translation of an input text to a first translation text, the input text comprising an ordered set of tokens;
a verification of a presence of a domain-specific terminology item in the first translation text;
a correctness assessment of the first translation text using the DS wherein upon an assessment of an incorrect translation, a replacement of the domain-specific terminology item with a domain-specific translation text item from the domain-specific multilingual terminology dictionary; and,
a second call to the generic machine translation engine to obtain a second translation text of the input text including the domain-specific translation text item;
**characterized in that** verification comprises:
a counting of occurrences of source and translation parts corresponding to the domain-specific translation text item in the input text and the first translation; and
upon the counting, determining a different number of source and translation parts, locating a wrong term translation in the first translation, and determining an alternative translation;
wherein locating a wrong term translation in the first translation comprises, sequentially:
attempting to locate the wrong term by out-of-context translation;
if the wrong term translation cannot be located by out-of-context translation, attempt the following steps, until the term is located;
considering all translation options simultaneously, each option suggesting a possible term location, wherein the translation options comprise out-of-context translation of the term, translation of the term with n neighbouring tokens of the term in the input text, translation of the n tokens left and/or right of the term in the input text, and translation of the input text excluding the term; and
selecting the best location based on the location suggested by the majority of the translation options.

8. The system of claim 7 wherein upon the counting determining a matching number of source and translation parts, the translation is deemed accurate.

9. The system of claim 7 wherein the processor further includes effecting a further call to the GMT and matching the domain-specific terminology item in the first translation text.

## Patentansprüche

1. Verfahren der mehrsprachigen Übersetzung, das einen bereichsadaptierten Verifizierungs-/Korrekturdienst enthält, umfassend:
erstes Übersetzen (10), durch einen Prozessor, eines ersten Sprachgegenstandes, der bereichsspezifische Terminologie umfasst, in einen entsprechenden zweiten Sprachgegenstand mit einem generischen Maschinenübersetzungsdienst, wobei der erste Sprachgegenstand einen geordneten Satz von Tokens umfasst;
Verifizieren (30), durch einen Prozessor, der Richtigkeit der Terminologieübersetzung in dem zweiten Sprachgegenstand relativ zu dem ersten Sprachgegenstand durch Zugreifen auf ein bereichsspezifisches mehrsprachiges Terminologiewörterbuch, das die bereichsspezifische Terminologie umfasst;
sofern eine Inkonsistenz zwischen einer gewählten Terminologie in dem zweiten Sprachgegenstand und einer Übersetzung der gewählten Terminologie durch das Terminologiewörterbuch festgestellt wird, Ersetzen (50) durch einen Prozessor der gewählten Terminologie in dem zweiten Sprachgegenstand durch eine Terminologieübersetzung der gewählten Terminologie aus dem Terminologiewörterbuch; und
Zugreifen, durch einen Prozessor, auf den generischen Maschinenübersetzungsdienst für eine zweite Übersetzung des ersten Sprachgegenstandes, der die Terminologieübersetzung beinhaltet, umfassend ein kontextuelles Übersetzen des ersten Sprachgegenstandes, der die Terminologieübersetzung umfasst;
**dadurch gekennzeichnet, dass** das Verifizieren umfasst:
Zählen des Auftretens von Ursprungs- und Übersetzungsteilen entsprechend dem domänenspezifischen Übersetzungstextgegenstand in dem eingegebenen Text und der ersten Übersetzung; und
bei dem Zählen, Bestimmen einer anderen Zahl von Ursprungs- und Übersetzungsteilen, Lokalisieren einer begrifflich falschen Übersetzung in der ersten Übersetzung und Bestimmen einer alternativen Übersetzung;
wobei das Lokalisieren einer begrifflich falschen Übersetzung in der ersten Übersetzung nacheinander umfasst:
Versuchen, den falschen Begriff durch eine nicht im Kontext befindliche Übersetzung zu lokalisieren;
sofern die begrifflich falsche Übersetzung durch eine nicht im Kontext befindliche Übersetzung lokalisiert werden kann, Versuchen der folgenden Schritte, bis der Begriff lokalisiert wird:
Berücksichtigen sämtlicher Übersetzungsoptionen gleichzeitig, wobei jede Option einen möglichen Begriffsort vorschlägt, wobei die Übersetzungsoptionen eine nicht im Kontext befindliche Übersetzung des Begriffes, eine Übersetzung des Begriffes mit n benachbarten Tokens des Begriffes in dem ersten Sprachgegenstand, eine Übersetzung der n Tokens links und/oder rechts des Begriffes in dem ersten Sprachgegenstand und eine Übersetzung des ersten Sprachgegenstandes umfassen, der den Begriff ausschließt; und
Auswählen des besten Ortes auf der Basis des Ortes, der durch die Mehrheit der Übersetzungsoptionen vorgeschlagen wird.

2. Verfahren nach Anspruch 1, bei dem die gewählte Terminologie einen Ursprungsbegriff in dem ersten Sprachgegenstand und einen entsprechenden Übersetzungsbegriff in dem zweiten Sprachgegenstand umfasst und das Verifizieren das Identifizieren umfasst, ob der Ursprungsbegriff oder der übersetzte Begriff in dem domänenspezifischen, mehrsprachigen Terminologiewörterbuch enthalten ist.

3. Verfahren nach Anspruch 2, bei dem das Identifizieren das Prüfen umfasst, ob ein Ursprungsteil des übersetzten Begriffes in dem ersten Sprachgegenstand vorhanden ist.

4. Verfahren nach Anspruch 3, bei dem der erste Sprachgegenstand einen Ursprungssatz und das Überprüfen das Bestätigen einer Gegenwart des Ursprungsteils in dem Ursprungssatz umfasst.

5. Verfahren nach Anspruch 4, bei dem bei Bestätigen der Gegenwart des Ursprungsteils in dem Ursprungssatz überprüft wird, ob ein Zielteil des übersetzten Begriffes eine Gegenwart in dem zweiten Sprachgegenstand hat.

6. Verfahren nach Anspruch 5, bei dem bei der zweiten Überprüfung, die die Gegenwart des Zielteils in dem zweiten Sprachgegenstand bestätigt, das Verfahren weiterhin das erste Zählen einer Anzahl von Erscheinungen des Ursprungsteils in dem Ursprungssatz und das zweite Zählen einer Anzahl von Erscheinungen des Zielteils in dem entsprechenden zweiten Sprachgegenstand umfasst und, sofern die erste Zählung sowie die zweite Zählung in der Anzahl gleich sind, Akzeptieren des entsprechenden zweiten Sprachgegenstandes als eine geeignete und konsistente Übersetzung in Bezug auf ein Terminologieverzeichnis des Terminologiewörterbuches.

7. System für die automatisierte Validierung einer Übersetzung, die von einem generischen Maschinenübersetzungsmotor bereitgestellt wird, umfassend:
einen generischen Maschinenübersetzungsmotor;
ein domänenspezifisches, mehrsprachiges Terminologiewörterbuch; und
einen Übersetzungsprozessor für die Ausführung:
eines ersten Anrufes an den generischen Maschinenübersetzungsmotor, eine erste Übersetzung eines Eingabetextes für einen ersten Übersetzungstext zu erhalten, wobei der Eingabetext einen geordneten Satz von Tokens umfasst;
einer Verifizierung einer Gegenwart eines domänenspezifischen Terminologiegegenstandes in dem ersten Übersetzungstext;
einer Richtigkeitsbewertung des ersten Übersetzungstextes mit Hilfe des DS, wobei bei einer Bewertung einer falschen Übersetzung eine Ersetzung des domänenspezifischen Terminologiegegenstandes durch einen domänenspezifischen Übersetzungstextgegenstand aus dem domänenspezifischen mehrsprachigen Terminologiewörterbuch erfolgt; und
eines zweiten Anrufs an den generischen Maschinenübersetzungsmotor, einen zweiten Übersetzungstext des Eingabetextes zu beziehen, der den bereichsspezifischen Übersetzungstextgegenstand umfasst;
**dadurch gekennzeichnet**, das die Verifizierung umfasst:
eine Zählung des Auftretens von Ursprungs- und Übersetzungsteilen entsprechend dem domänenspezifischen Übersetzungstextgegenstand in dem Eingabetext und der ersten Übersetzung; und
bei der Zählung, Bestimmen einer anderen Anzahl von Ursprungs- und Übersetzungsteilen, Lokalisieren einer Übersetzung falscher Begrifflichkeit in der ersten Übersetzung und Bestimmen einer alternativen Übersetzung;
wobei das Lokalisieren einer Übersetzung falscher Begrifflichkeit in der ersten Übersetzung aufeinanderfolgend umfasst:
Versuchen des Auffindens des falschen Begriffes durch nicht im Kontext befindliche Übersetzung;
sofern die Übersetzung falscher Begrifflichkeit durch nicht im Kontext befindliche Übersetzung nicht lokalisiert werden kann, Versuchen der folgenden Schritte, bis der Begriff lokalisiert ist;
Berücksichtigen sämtlicher Übersetzungsoptionen gleichzeitig, wobei jede Option einen möglichen Begriffsort vorschlägt, wobei die Übersetzungsoptionen eine nicht im Kontext befindliche Übersetzung des Begriffes, eine Übersetzung des Begriffes mit n benachbarten Tokens des Begriffes in dem Eingabetext, eine Übersetzung der n Tokens links und/oder rechts des Begriffes in dem Eingabetext und eine Übersetzung des Eingabetextes umfassen, der den Begriff ausschließt; und
Wählen des besten Ortes auf der Basis des Ortes, der von der Mehrheit der Übersetzungsoptionen vorgeschlagen wird.

8. System nach Anspruch 7, bei dem bei der Zählung, die eine passende Zahl von Ursprungs- und Übersetzungsteilen bestimmt, die Übersetzung als präzise beurteilt wird.

9. System nach Anspruch 7, bei dem der Prozessor weiterhin das Bewirken eines weiteren Anrufs an die GMT und das Abstimmen des domänenspezifischen Terminologiegegenstandes in dem ersten Übersetzungstext umfasst.

## Revendications

1. Procédé de traduction multilingue incluant un service de vérification/correction adapté à un domaine, incluant :
la première traduction (10), par un processeur, d'un premier item de langue incluant une terminologie spécifique à un domaine en un second item de langue correspondant avec un service de traduction automatique générique, le premier item de langue comprenant un ensemble ordonné d'unités ;
la vérification (30), par un processeur, de la justesse de traduction de terminologie dans le second item de langue par rapport au premier item de langue en accédant à un dictionnaire de terminologie multilingue spécifique à un domaine incluant la terminologie spécifique à un domaine ;
si une incohérence est identifiée entre une terminologie sélectionnée dans le second item de langue et une traduction de la terminologie sélectionnée par le dictionnaire de terminologie, le remplacement (50), par un processeur, de la terminologie sélectionnée dans le second item de langue par une traduction de terminologie de la terminologie sélectionnée à partir du dictionnaire de terminologie ; et
l'accès, par un processeur, au service de traduction automatique générique pour une seconde traduction du premier item de langue incluant la traduction de terminologie comprenant une traduction contextuelle du premier item de langue incluant la traduction de terminologie ;
**caractérisé en ce que** la vérification comprend :
le comptage d'occurrences de parties source et de traduction correspondant à l'item de texte de traduction spécifique à un domaine dans le texte d'entrée et la première traduction ; et
lors du comptage, la détermination d'un nombre différent de parties source et de traduction, la localisation d'une mauvaise traduction de terme dans la première traduction, et la détermination d'une autre traduction ;
où la localisation d'une mauvaise traduction de terme dans la première traduction comprend, séquentiellement :
la tentative de localiser le mauvais terme par traduction hors contexte ;
si la mauvaise traduction de terme ne peut pas être localisée par traduction hors contexte, la tentative des étapes suivantes, jusqu'à ce que le terme soit localisé ;
la considération de toutes les options de traduction simultanément, chaque option suggérant une localisation de terme possible, où les options de traduction comprennent la traduction hors contexte du terme, la traduction du terme avec n unités voisines du terme dans le premier item de langue, la traduction des n unités à gauche et/ou à droite du terme dans le premier item de langue, et la traduction du premier item de langue excluant le terme ; et
la sélection de la meilleure localisation sur la base de la localisation suggérée par la majorité des options de traduction.

2. Procédé selon la revendication 1, dans lequel pour la terminologie sélectionnée comprend un terme source dans le premier item de langue et un terme de traduction correspondant dans le second item de langue, et la vérification comprend l'identification de si le terme source ou le terme traduit est inclus dans le dictionnaire de terminologie multilingue spécifique à un domaine.

3. Procédé selon la revendication 2, dans lequel l'identification comprend le contrôle de si une partie source du terme traduit est présente dans le premier item de langue.

4. Procédé selon la revendication 3, dans lequel le premier item de langue comprend une phrase source et le contrôle inclut la confirmation d'une présence de la partie source dans la phrase source.

5. Procédé selon la revendication 4, dans lequel lors de la confirmation de la présence de la partie source dans la phrase source, le contrôle de si une partie cible du terme traduit a une présence dans le second item de langue.

6. Procédé selon la revendication 5, dans lequel lorsque le second contrôle confirme la présence de la partie cible dans le second item de langue, le procédé inclut en outre un premier comptage d'un nombre d'occurrences de la partie source dans la phrase source, et un second comptage d'un nombre d'occurrences de la partie cible dans le second item de langue correspondant, et si le premier comptage et le second comptage sont en nombre égal, l'acceptation du second item de langue correspondant comme une traduction correcte et cohérente par rapport à une base terminologique du dictionnaire de terminologie.

7. Système pour la validation automatisée d'une traduction fournie par un moteur de traduction automatique générique, comprenant :
un moteur de traduction automatique générique ;
un dictionnaire de terminologie multilingue spécifique à un domaine ; et
un processeur de traduction pour effectuer :
un premier appel vers le moteur de traduction automatique générique pour obtenir une première traduction d'un texte d'entrée en un premier texte de traduction, le texte d'entrée comprenant un ensemble ordonné d'unités ;
une vérification d'une présence d'un item de terminologie spécifique à un domaine dans le premier texte de traduction ;
une évaluation de justesse du premier texte de traduction en utilisant le DS, où lors d'une évaluation d'une traduction incorrecte, un remplacement de l'item de terminologie spécifique à un domaine par un item de texte de traduction spécifique à un domaine à partir du dictionnaire de terminologie multilingue spécifique à un domaine ; et,
un second appel vers le moteur de traduction automatique générique pour obtenir un second texte de traduction du texte d'entrée incluant l'item de texte de traduction spécifique à un domaine ;
**caractérisé en ce que** la vérification comprend :
un comptage d'occurrences de parties source et de traduction correspondant à l'item de texte de traduction spécifique à un domaine dans le texte d'entrée et la première traduction ; et
lors du comptage, la détermination d'un nombre différent de parties source et de traduction, la localisation d'une mauvaise traduction de terme dans la première traduction, et la détermination d'une autre traduction ;
dans lequel la localisation d'une mauvaise traduction de terme dans la première traduction comprend, séquentiellement :
la tentative de localiser le mauvais terme par traduction hors contexte ;
si la mauvaise traduction de terme ne peut pas être localisée par traduction hors contexte, la tentative des étapes suivantes, jusqu'à ce que le terme soit localisé ;
la considération de toutes les options de traduction simultanément, chaque option suggérant une localisation de terme possible, où les options de traduction comprennent la traduction hors contexte du terme, la traduction du terme avec n unités voisines du terme dans le texte d'entrée, la traduction des n unités à gauche et/ou à droite du terme dans le texte d'entrée, et la traduction du texte d'entrée excluant le terme ; et
la sélection de la meilleure localisation sur la base de la localisation suggérée par la majorité des options de traduction.

8. Système selon la revendication 7, dans lequel lorsque le comptage détermine un nombre concordant de parties source et de traduction, la traduction est jugée exacte.

9. Système selon la revendication 7, dans lequel le processeur inclut en outre l'exécution d'un appel supplémentaire vers la GMT et la mise en correspondance de l'item de terminologie spécifique à un domaine dans le premier texte de traduction.
